# EUROPÄISCHE PATENTANMELDUNG

(11) **EP 2 342 967 A1**
(43) Veröffentlichungstag der Anmeldung: **13.07.2011**
(21) Anmeldenummer: 11000016.3
(22) Anmeldetag: 03.01.2011
(51) Int. Cl.: A01D 89/00

(54) **Gutaufnehmer mit Wickelschutz**

(30) Priorität: 07.01.2010 DE 202010000674 U; 25.06.2010 DE 202010009564 U; 30.06.2010 DE 202010009700 U; 10.07.2010 DE 202010010077 U
(71) Anmelder: Aloys Freitag, 59320 Ennigerloh (DE)
(72) Erfinder: Aloys Freitag, 59320 Ennigerloh (DE)
(74) Vertreter: Ahrens, Thomas

(57) **Zusammenfassung**

Die vorliegende Erfindung betrifft einen Gutaufnehmer für die Aufnahme von Erntegut, wie insbesondere von Heu oder Stroh.

Es hat sich herausgestellt, dass es insbesondere im Randbereich solcher Gutaufnehmer oft zu Stauungen kommt, da dort eine gegenüber dem mittleren Bereich vermehrte Menge des Ernteguts auftritt. Durch die Stauungen kommt es dazu, dass sich das Erntegut vorzugsweise in den äußeren Bereichen wickelt. Das führt zu Arbeitsunterbrechungen und ggf. auch zu einem Zinkenbruch.

Um diese Probleme zu reduzieren oder zu vermeiden wird erfindungsgemäß vorgeschlagen, einen Wickelschutz vorzusehen. Dabei handelt es sich um ein nahezu ringförmiges Element, das an geeigneten Stellen radial um den Gutaufnehmer angeordnet wird.

## Beschreibung

Die vorliegende Erfindung betrifft einen Gutaufnehmer, auch Pickup genannt, für die Aufnahme von Erntegut, wie insbesondere von Heu oder Stroh.

Derartige Gutaufnehmer werden üblicherweise in der Landwirtschaft verwendet, um auf einem Feld liegendes Gut, das zuvor getrocknet sein kann und abgelegt wurde, aufzunehmen und einer weiteren Verarbeitung zuzuführen. Eine solche Verarbeitung kann ein Ablegen in einen Stauraum, wie auf einem Ladewagen, ein Pressen in einer Ballenpresse, ein Häckseln in einem Feldhäcksler, ein Dreschen in einem Mähdrescher oder dergleichen sein.

Derartige Gutaufnehmer umfassen üblicherweise eine Antriebswelle, um die ein Zinkenträger - oder auch mehrere - derart angeordnet ist, dass er bei Betrieb um die Antriebswelle gedreht wird. An dem Zinkenträger sind Zinken befestigt, die bei Betrieb ebenfalls um die Antriebswelle bewegt werden und dadurch das Erntegut aufnehmen und nach oben transportieren. Zusätzlich sind Abstreifer vorhanden, die helfen, dass sich das Erntegut geeignet von den Zinken löst.

Im Stand der Technik sind gesteuerte und ungesteuerte Gutaufnehmer bekannt. Diese unterscheiden sich im Wesentlichen dadurch, dass bei einem gesteuerten Gutaufnehmer die Lage der Zinkenträger, insbesondere deren Winkelstellung, gegenüber der Antriebswelle durch an sich bekannte Exzentersteuerungen bzw. Kurvenbahnen gesteuert wird. Eine solche Steuerung weist einen recht hohen Verschleiß auf. Außerdem erfordert eine derartige Steuerung ein zusätzliches Drehmoment. Daher wurde in der EP 0 903 077 B1 bereits ein ungesteuerter Gutaufnehmer vorgeschlagen.

Für eine gute Funktion eines ungesteuerten Gutaufnehmers ist es wichtig, dass die Abstreifer auf die Kurvenbahn der Zinken angepasst sind. Besonders bewährt hat sich ein Abstreifer mit einem speziellen wellenförmigen Design, wie er beispielsweise verwendet wird bei der EasyFlow Pick-up der Firma Krone, Spelle. An den äußeren Seiten bekannter Gutaufnehmer kommt es oft zu Unregelmäßigkeiten bezogen auf die Aufnahme des Ernteguts. Ein Grund dafür kann beispielsweise eine gegenüber dem mittleren Bereich vermehrte Menge des Ernteguts im äußeren Bereich der Einrichtung sein. Diese vermehrt aufzunehmende Menge des Ernteguts resultiert aus der Wirkung von Führungsblechen, die den Einzugsbereich der Einrichtung ausweiten.

Als Folge davon ergeben sich Stauungen bei dem Transport des Ernteguts. Diese wiederum führen dazu, dass sich das Erntegut vorzugsweise in den äußeren Bereichen der Einrichtung zwischen dem ersten Federzinken und einem Rotorlagerteller wickelt. Dieses beeinträchtigt die Funktion der Einrichtung erheblich, so dass eine Wartung und damit eine Arbeitsunterbrechung notwendig wird. Außerdem kommt es gelegentlich auch zu einem Zinkenbruch. Dieser kann dann hohe Kosten verursachen, wenn es zu Maschinenschäden in der weiteren Verarbeitung des Ernteguts kommt.

Es ist die Aufgabe der vorliegenden Erfindung, die Nachteile des Standes der Technik zu vermeiden.

Diese Aufgabe wird gelöst durch die Erfindung nach Anspruch 1. Durch die abhängigen Ansprüche werden vorteilhafte Weiterbildungen angegeben.

Zur Reduzierung oder Vermeidung der geschilderten Probleme ist erfindungsgemäß ein im Wesentlichen zumindest teilweise ringförmiges Abdeckelement vorgesehen, das als Wickelschutz dient und im Folgenden auch so bezeichnet wird. Dieser kann einstückig oder aus mehreren Segmenten zusammengesetzt sein. Er kann derart gestaltet und angeordnet sein, dass er sich zwischen Zinken - oder sonstigen Aufnehmern für Erntegut oder dergleichen - befindet. Vorteilhaft ist es jedoch, wenn Öffnungen vorgesehen sind, durch die Zinken ragen können. Dabei sind die Öffnungen derart bemessen, dass die Zinken auch wie gewünscht federn können. Der Wickelschutz wird erfindungsgemäß so montiert, dass er sich radial zwischen den Befestigungspunkten der betroffenen Zinken an einer drehbar gelagerten Trägerstruktur und deren Endpunkten befindet. Die drehbar gelagerte Trägerstruktur kann beispielweise aus einem Hohlzylinder bestehen. Bevorzugterweise wird jedoch ein Aufbau verwendet, der Zinkenträger umfasst, die mittels geeigneter Mittel, wie einer Lagerscheibe, an einer Antriebswelle befestigt sind. Der Wickelschutz ist bevorzugterweise, jedoch nicht zwangsläufig, so montiert, dass er sich gemeinsam mit der Trägerstruktur dreht.

Durch den Wickelschutz ist es möglich, die maximale Eindringtiefe von Ernte- und Sammelgütern in den Bereich der Trägerstruktur zu begrenzen. Somit wird durch den Wickelschutz beispielsweise bei dem Anwendungsfall einer Großballenpresse verhindert, dass das Ernte-/Sammelgut durch die Aufnahmebewegung der Zinken in den trägerstrukturnahen Außenbereich zwischen den Zinken und Rotortellern gelangt. Der Wickelschutz kann sowohl von den Zinken durchdrungen werden als auch innerhalb - z.B. bei Doppelfederzinken - und/oder zwischen den Zinken angeordnet werden.

Es ist möglich, dass der Wickelschutz zumindest teilweise einen profilförmigen Verlauf aufweist, wie eine Kontur, die von einem kreisförmigen Verlauf abweicht. Dabei können im montierten Zustand unterschiedliche Abstände zu der Trägerstruktur (Zinkenträger, usw.) realisiert werden. Hierdurch ist es möglich, eine pulsartige Schubbewegung auf das Erntegut zu bewirken, was zu einem insgesamt gleichmäßigeren Fluss des Ernteguts führt, da Stauungen innerhalb einer Umdrehung der Trägerstruktur aufgelöst werden und somit umfangreichere Stauungen, die zu einem sehr unregelmäßigen Fluss führen, gar nicht erst auftreten.

Da es sich bei bekannten Gutaufnehmern gezeigt hat, dass es insbesondere in den äußeren Bereichen zu Stauungen kommen kann, wird der Wickelschutz bevorzugterweise dort angebracht. Es versteht sich jedoch, dass ein Wickelschutz auch an anderen Stellen des Gutaufnehmers montiert werden kann.

Wenn mehr als ein Wickelschutz montiert ist, ist es auch möglich, dass diese unterschiedliche Konturen aufweisen, um entsprechende pulsartige Schubbewegungen zu bewirken. Es ist weiterhin möglich, dass die an einem Gutaufnehmer befestigten Wickelschutze unterschiedliche Durchmesser haben. Wenn die Kontur eines Wickelschutzes verstellbar ist, können derartige Effekte auch verändert werden ohne den Wickelschutz auszutauschen.

Es hat sich gezeigt, dass es insbesondere bei kompakten ungesteuerten Gutaufnehmern, wie sie beispielsweise in der deutschen Gebrauchsmusterschrift DE 20 2010 010 077 U1 beschrieben sind, günstig ist, die montierten Zinken im Ruhezustand mit einem Zinken-Winkel zu montieren, der zwischen 14,2 und 16,2 Grad liegt. Als Ruhezustand ist gemeint, dass die üblicherweise federnden Zinken frei von äußeren Kräften sind. Der Zinken-Winkel, der hier als Abweichung zwischen der Senkrechten eines die rotierende Trägerstruktur beschreibenden Kreises und der Richtung des Zinkens an seinem Endpunkt zu verstehen ist, kann auf verschiedene Weise bewirkt werden, wie durch geeignete Montage des entsprechenden Zinkenträgers, durch geeignete Montage des Zinkens auf dem Zinkenträger und/oder durch passende Gestaltung des Zinkens.

Zumindest ein Teil der verwendeten Zinken sind bevorzugterweise federnd gelagert. Dadurch können im Betrieb bei Aufnahme von Erntegut Auslenkungen von bis zu 20 Grad ermöglicht werden.

Es hat sich außerdem gezeigt, dass es günstig ist, wenn zumindest an einem der Wickelschutze Leitbleche montiert sind, die das Erntegut von dem Außenbereich des Gutaufnehmers zu dessen Innenseite leiten. Für eine einfache Montage derartiger Leitbleche können passende Strukturen, wie Öffnungen, Sicken, Einkerbungen oder dergleichen, vorgesehen sein. Um die Wickelschutze auf beiden Endseiten eines Gutaufnehmers verwenden zu können, ist ein symmetrischer Aufbau vorteilhaft. Das gilt auch für die Strukturen zur Montage der Leitbleche. Es hat sich daher als besonders vorteilhaft herausgestellt, derartige Strukturen x-förmig zu gestalten. Das kann beispielsweise erfolgen durch x-förmig angeordnete Schlitzöffnungen, durch entsprechende Aneinanderreihung von Einzelöffnungen oder dergleichen.

Insbesondere dann, wenn sich der Wickelschutz gemeinsam mit der Trägerstruktur dreht und Öffnungen hat, durch die Zinken zumindest teilweise ragen, ist es wichtig, dass der Wickelschutz bezüglich der Zinken passend positioniert ist und auch im Betrieb bleibt. Dafür hat es sich bewährt, eine Positionierhilfe vorzusehen. Diese kann unterschiedlich gestaltet sein.

Weitere Einzelheiten und Vorteile der Erfindung werden im Folgenden anhand von bevorzugten Ausführungsbeispielen erläutert. Dabei zeigen
- Fig. 1: eine perspektivische Ansicht eines bevorzugten Ausführungsbeispiels für einen Gutaufnehmer gemäß der Erfindung
- Fig. 2: eine Querschnittsdarstellung des Gutaufnehmers
- Fig. 3: einen Zinkenträger
- Fig. 4: Querschnittdarstellung eines Zinken auf Zinkenträger
- Fig. 5: einen Rotor mit Wickelschutz ohne Positionierhilfe
- Fig. 6: einen Wickelschutz ohne Positionierhilfe
- Fig. 7: einen Rotor mit Wickelschutz mit Positionierhilfe
- Fig. 8: einen Wickelschutz mit Positionierhilfe
- Fig. 9: einen Wickelschutz zur Aufnahme von Leitblechen
- Fig. 10: das Ringteil des Wickelschutzes aus Fig. 9
- Fig. 11: die Lagerplatte des Wickelschutzes aus Fig. 9
- Fig. 12: die Montage des Wickelschutzes aus Fig. 9
- Fig. 13: einen Rotor mit Wickelschutz aus Fig. 9

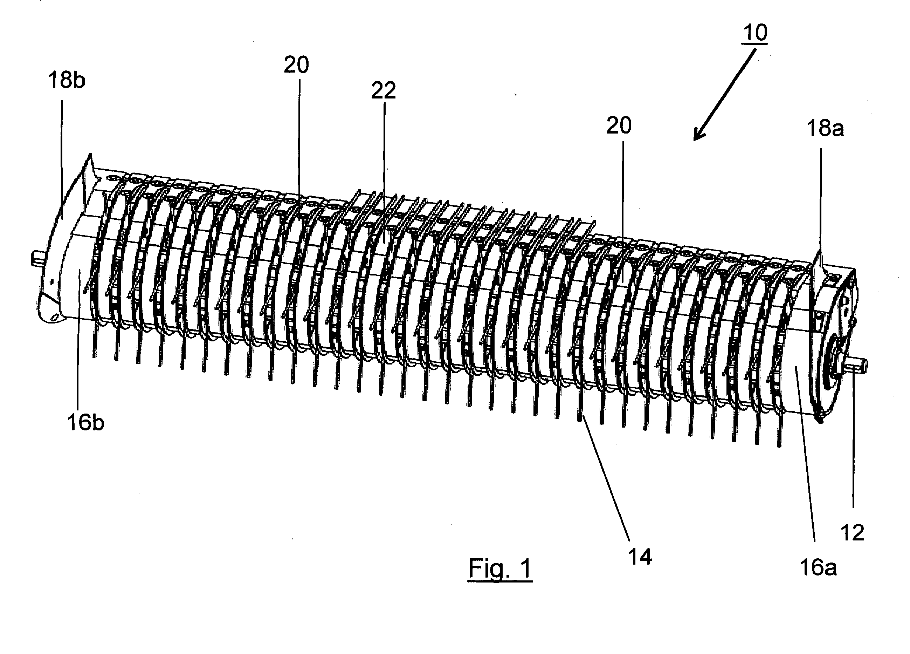

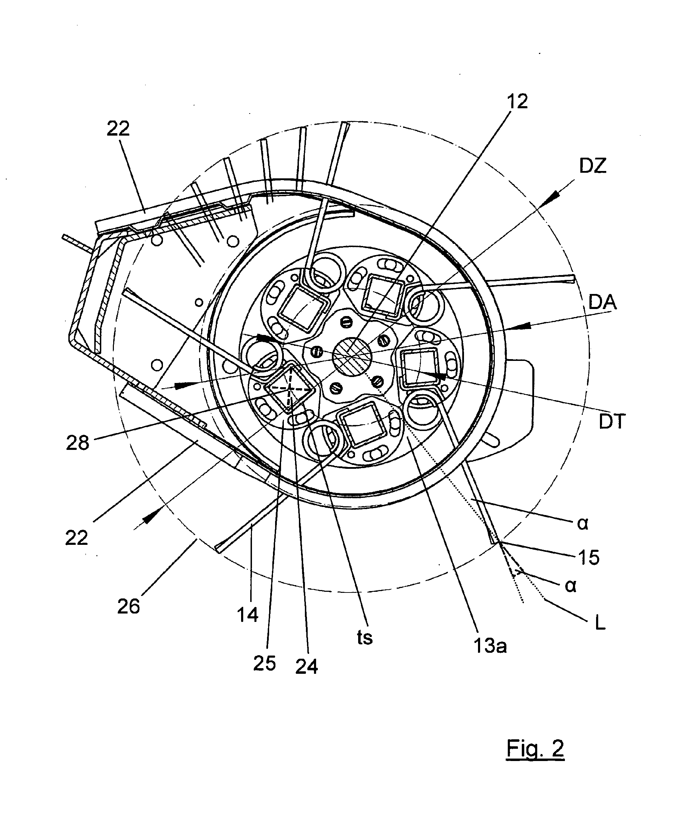

Fig. 1 zeigt eine perspektivische Ansicht eines bevorzugten Gutaufnehmers 10, der in der Lage ist, auf einem Feld liegendes Ernte- oder Sammelgut, wie insbesondere Heu oder Stroh, aufzunehmen. Dieser enthält entlang einer zentralen Achse eine Antriebswelle 12, auf die mittels an sich bekannter Befestigungsmittel eine Reihe von Zinkenträgern (s. Fig. 2) angeordnet sind, die jeweils eine Vielzahl von Zinken 14 tragen. Zu diesen Befestigungsmitteln gehören insbesondere Lagerscheiben 13 (s. Fig. 2), von denen zumindest je eine auf der rechten und der linken Seite der Antriebswelle angeordnet ist.

Auf beiden Seiten des Gutaufnehmers 10 befinden sich außerdem Seitenteile 16a bzw. 16b, auf die Einführbleche 18a bzw. 18b montiert sind. Diese sind in dem bevorzugten Beispiel angeschraubt. Denkbar ist jedoch auch jede andere an sich bekannte Befestigungsmöglichkeit, wie Nieten, Schweißen oder dergleichen. Die Länge des Gutaufnehmers 10, das heißt der Abstand zwischen den äußeren Kanten der Einführbleche 18a, 18b beträgt im Ausführungsbeispiel 1910 mm.

Die Zinken 14 werden im Normalbetrieb von vorne unten nach hinten oben bewegt. Das heißt, bei Blick von der linken Seite (im Bereich des Seitenteils 16b) des Gutaufnehmers 10 werden die Zinken 14 derartig bewegt, dass sie entgegen des Uhrzeigersinns gedreht werden. Damit befördern sie im Normalbetrieb aufzunehmendes Gut nach oben. Dieses Gut wird mittels erster Abstreifer 20 bzw. zweiter Abstreifer 22 von den Zinken 14 entfernt und mittels weiterer Mittel, wie Förderbleche, Transportwellen oder dergleichen in einen hier nicht gezeigten Stau- bzw. Verarbeitungsraum befördert. Die ersten Abstreifer 20 befinden sich im rechten und im linken Teil des Gutaufnehmers 10. Bevorzugterweise sind davon insgesamt zwanzig Stück vorhanden. Die zweiten Abstreifer 22 befinden sind im Mittelteil des Gutaufnehmers 10. Davon sind bevorzugterweise elf Stück vorhanden. Die Abstreifer sind in diesem Ausführungsbeispiel unterschiedlich gestaltet.

Fig. 2 zeigt eine Querschnittsdarstellung des Gutaufnehmers 10 mit Blick von der linken Seite (von Seitenteil 16b) zur rechten Seite auf Seitenteil 16a. Diese Darstellung betrifft den Mittelteil des Gutaufnehmers 10. Daher ist einer der zweiten Abstreifer 22 gezeigt. Hier sind ebenfalls fünf Zinkenträger 24 zu erkennen, an denen die Zinken 14 montiert sind. Außerdem ist die rechte Lagerscheibe 13a erkennbar, an die die Zinkenträger 24 um die Antriebswelle 12 herum montiert sind.

Der bevorzugte Gutaufnehmer 10 hat eine besonders kompakte Bauform. Das wird hier insbesondere anhand folgender Maße gezeigt. Durch die Rotation der Zinken 14 um die Achse 12 beschreiben ihre Außenseiten einen Kreis 26. Dieser hat hier einen Durchmesser DZ von 435 mm. Der Abstreifer 22 verläuft in weiten Teilen kreisförmig und zwar mit einem Außendurchmesser DA, der hier 280 mm beträgt. Die Zinkenträger 24 haben hier bei einer Kantenlänge ts von ca. 36 mm einen quadratischen Querschnitt. Ihre Mittelpunkte 28, die sich ergeben aus dem Schnitt der Diagonalen, beschreiben bei Rotation ebenfalls eine Kreisbahn. Diese hat einen Durchmesser DT, deren Wert hier 127 mm beträgt.

In diesem Ausführungsbeispiel weisen die Zinkenträger 24 eine Einstellplatte 25 auf, die es erlaubt, dass die Zinkenträger 24 verdreht werden können, wodurch der in Fig. 2 gezeigte Zinken-Winkel α verändert werden kann. Dieser ergibt sich zwischen der Verlängerung eines der Zinken 14 und einer Linie L, die sowohl durch den Mittelpunkt von Kreis 26 als auch durch den Endpunkt 15 des betreffenden Zinkens 14 verläuft und somit eine entsprechende Orthogonale zu dem Kreis 26 bildet. Bei der kompakten Bauform des bevorzugten ungesteuerten Gutaufnehmers, wie er beispielsweise aus der deutschen Gebrauchsmusterschrift DE 20 2010 010 077 U1 bekannt ist, hat sich für α ein Wert von 15,2 +/- 1 Grad besonders bewährt.

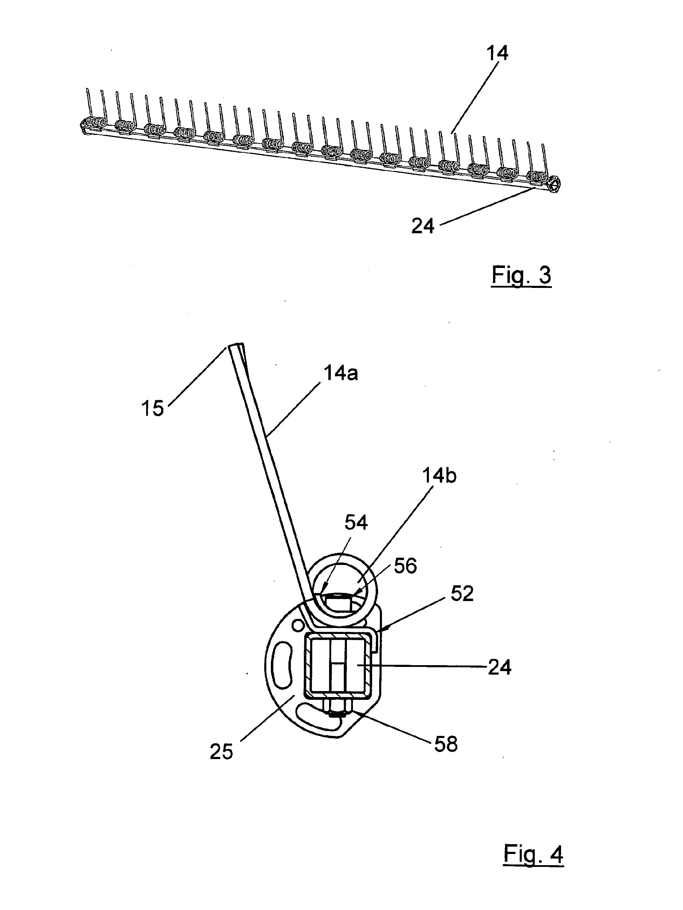

Fig. 3 zeigt einen der Zinkenträger 24. Dort sind die Zinken 14, die einen geraden Teil 14a und einen spiralförmigen Teil 14b aufweisen (Fig. 4) über einen Federschuh 52 und einer Druckplatte 54 mittels einer Zylinderschraube 56 und einer Sicherungsmutter 58 befestigt.

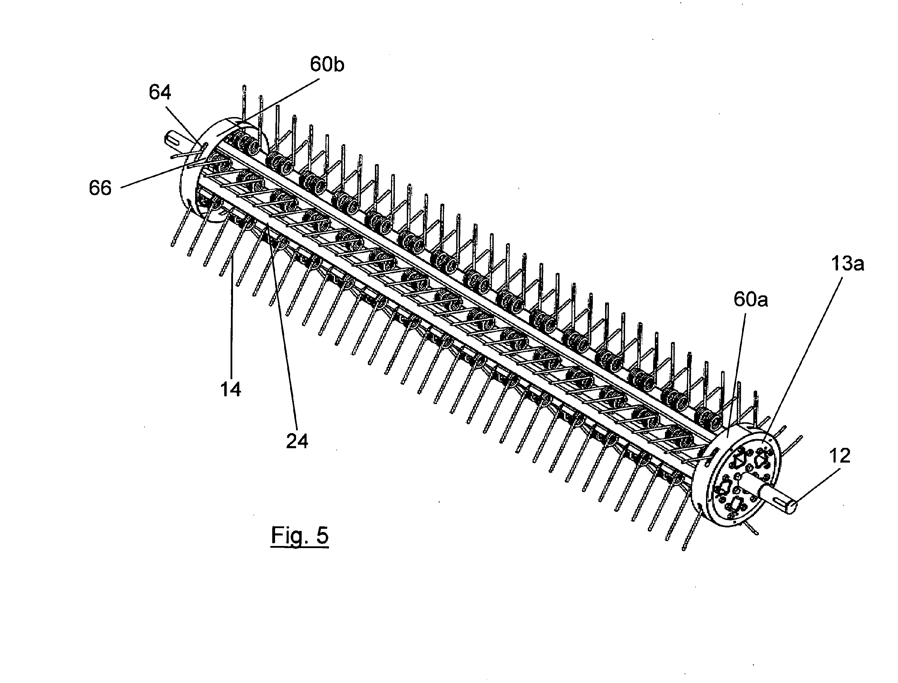

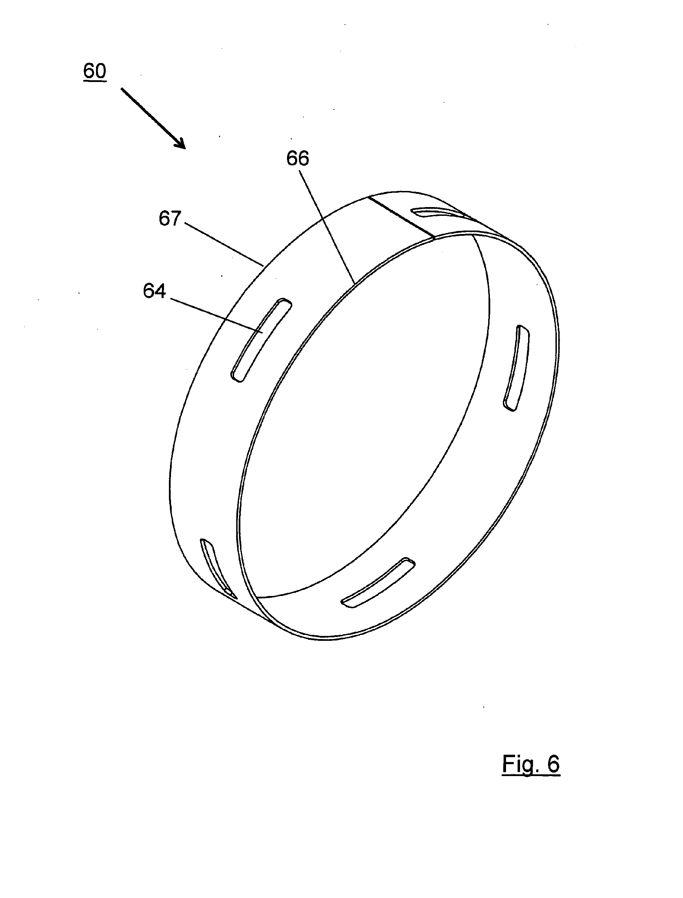

Fig. 5 zeigt den montierten Rotor, der im Wesentlichen aus einer Trägerstruktur besteht, die die Antriebswelle 12, die Zinkenträger 24 sowie entsprechende Befestigungselemente, wie die Lagerscheiben 13a bzw. 13b letzterer hier nicht gezeigt), umfasst. Außerdem ist auf beiden Seiten je ein Wickelschutz 60a bzw. 60b vorgesehen, der in Fig. 6 näher gezeigt ist. Der Wickelschutz 60 ist hier nahezu ringförmig und kann aus einem oder aus mehreren Teilen bestehen und verhindert, dass im Randbereich Erntegut in die beweglichen Teile des Gutaufnehmers 10 gelangt, wie insbesondere in den Bereich der Antriebswelle 12 oder in den trägerstrukturnahen Außenbereich zwischen den Zinken 14 und Rotorlagertellern. Er dreht sich mit der Achse 12 mit und weist Öffnungen 64 auf, die als Langlöcher gestaltet sind und durch die Zinken 14 im Randbereich durchgreifen können. Die Gestaltung als Langloch bietet insbesondere die Möglichkeit, dass genügend Freiraum vorhanden ist, um die im Bereich des Wickelschutzes 60 vorgesehenen Zinken 14 ohne zusätzlichen Aufwand montieren und demontieren zu können.

Außerdem können die in diesem Bereich montierten Zinken ähnlich federn wie die anderen Zinken 14, ohne mit dem Wickelschutz 60 zu kollidieren. Die in den Mittelbereich ragende Kante des Wickelschutzes 60 ist in Fig. 5 und 6 jeweils mit der Referenz 66 gekennzeichnet.

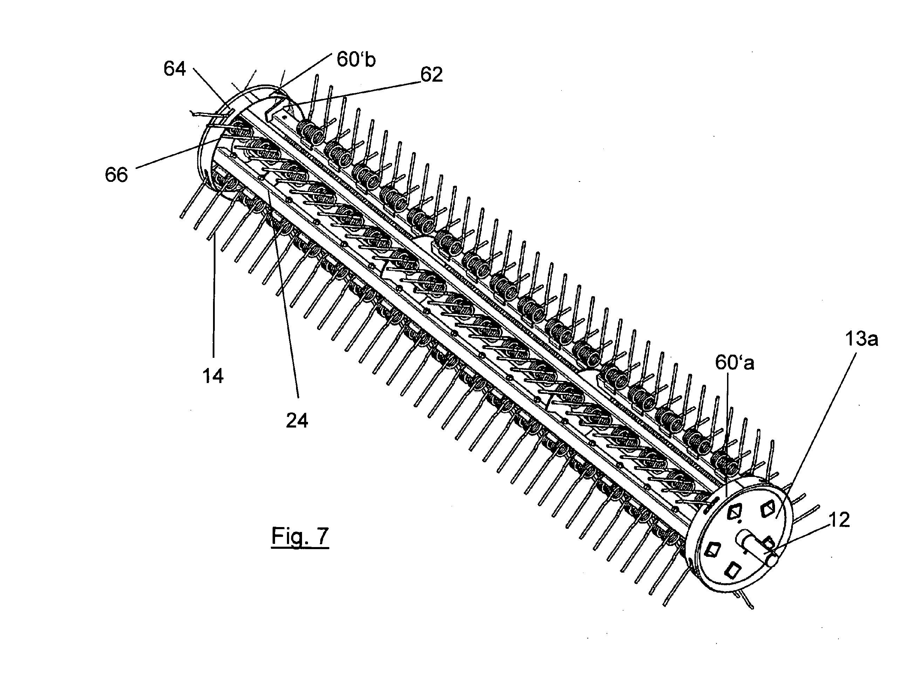

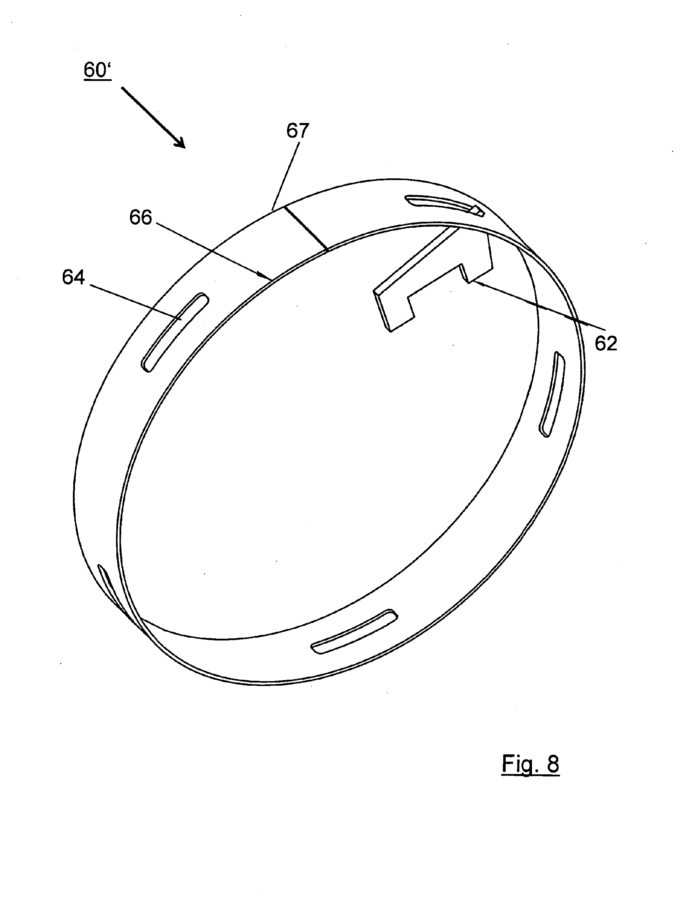

Fig. 7 zeigt den montierten Rotor mit einem Wickelschutz 60', der weitestgehend dem Wickelschutz 60 entspricht, jedoch zusätzlich eine Positionierhilfe 62 zur einfachen Justierung aufweist und in Fig. 8 näher gezeigt ist. Diese kann während der Montage bei einem der Zinkenträger 24 eingehakt werden. Sie kann fest mit dem Wickelschutz 60' verbunden sein, wie durch Schweißen, Löten oder dergleichen. Denkbar ist auch, dass die Positionierhilfe 62 nach Justierung und Befestigung des Wickelschutzes 60' von dem Gutaufnehmer 10 entfernt wird.

Durch die Positionierung des Wickelschutzes 60 bzw. 60' kann der Fluss des Erntegutes optimiert werden. Dafür hat sich als vorteilhaft herausgestellt, verschiedene Durchmesser über die Breite des Gutaufnehmers 10 anzuordnen. Weiterhin ist es möglich, den Wickelschutz nicht in der Form eines kreisförmigen Elementes sondern als Profil zu gestalten, welches im montierten Zustand unterschiedliche Abstände zu dem Rotor bzw. der Trägerstruktur aufweist. Hierdurch ist es möglich, eine pulsartige Schubbewegung auf das Erntegut zu bewirken, was überraschenderweise zu einem insgesamt gleichmäßigeren Fluss des Ernteguts führt.

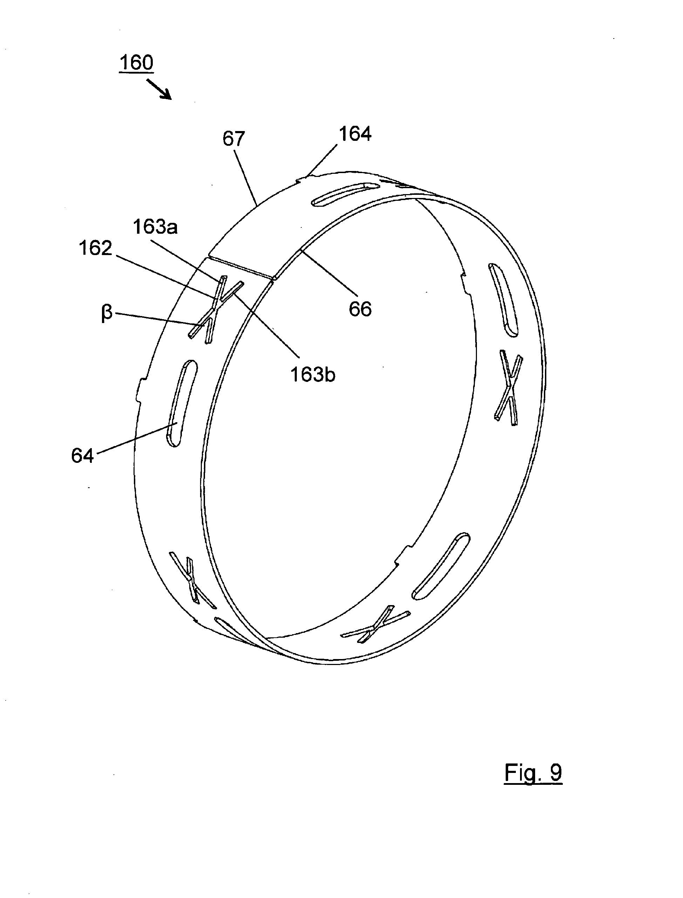

Fig. 9 zeigt einen weiteren Wickelschutz 160. Dieser weist neben den Langlöchern 64, durch die im montierten Zustand die hier nicht dargestellten Zinken 14 ragen können, weitere Öffnungen 162 auf, die hier x-förmig sind. Das heißt, die Öffnungen 162 bestehen hier aus zwei Schlitzen 163a, 163b, die sich kreuzen. Sie schließen dabei einen Winkel β ein, der in diesem Ausführungsbeispiel einen Wert von 30 Grad hat. Weiterhin weist der Wickelschutz 160 mehrere Vorsprünge 164 an der Außenkante 67 auf.

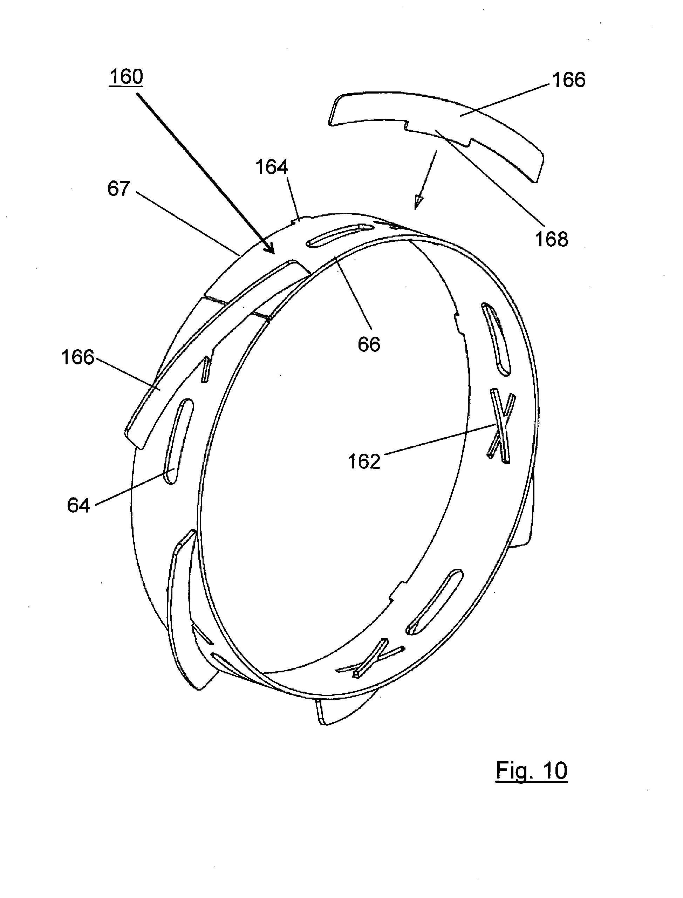

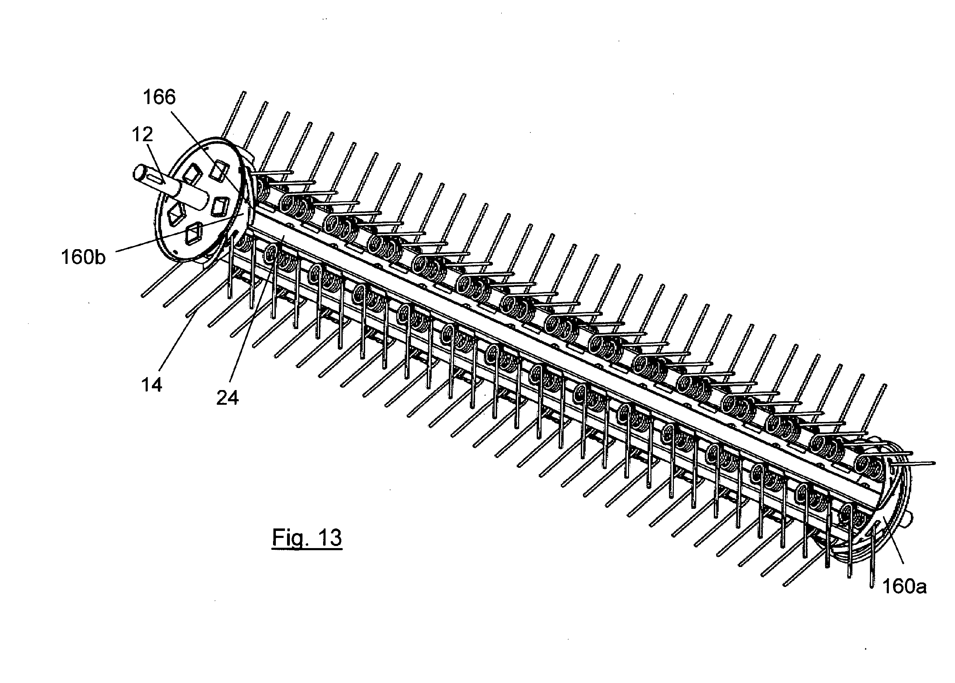

Die x-förmigen Öffnungen 162 dienen zur Aufnahme von Leitblechen 166, wie insbesondere aus Fig. 10 ersichtlich ist. Jedes der Leitbleche 166 weist eine Auswölbung 168 auf, die geeignet ist, in einen der Schlitze 163 eingeführt zu werden. Die Leitbleche 166 werden derart montiert, dass im Betrieb Erntegut von der Außenkante 67 zu der Innenkante 66 geleitet wird. Das bedeutet also, dass bei Blick auf die Innenkante 66 der in Fig. 10 gezeigte Wickelschutz 160 derart auf dem Gutaufnehmer 10 montiert wird, dass der Wickelschutz 160 sich im Betrieb entgegen dem Uhrzeigersinn dreht. Durch den symmetrischen Aufbau des Wickelschutzes 160, einschließlich der x-förmigen Öffnungen 162, ist er geeignet, wahlweise auf einer der beiden Seiten des Gutaufnehmers montiert zu werden (siehe auch Fig. 13).

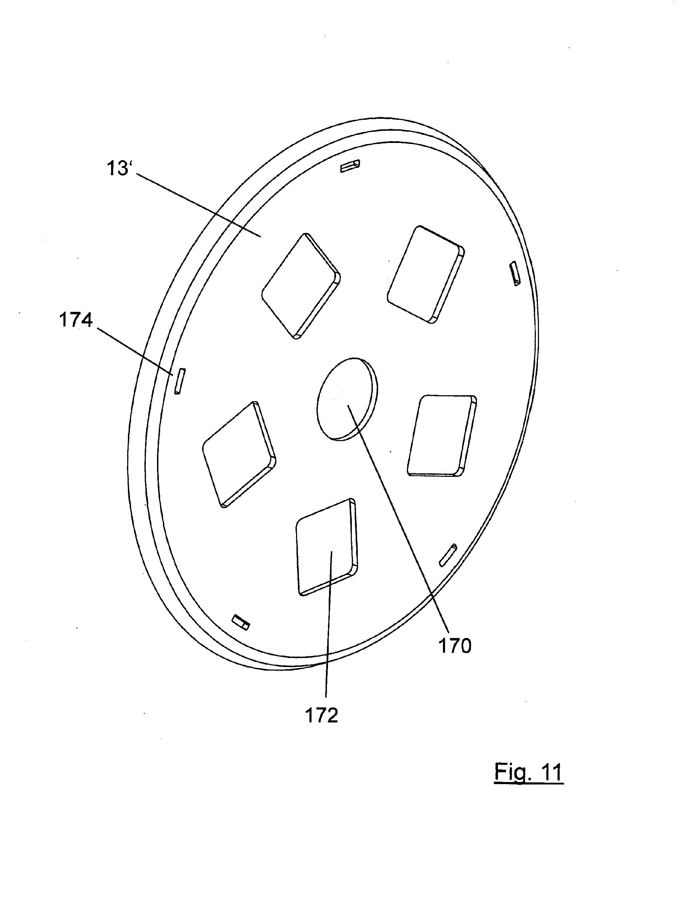

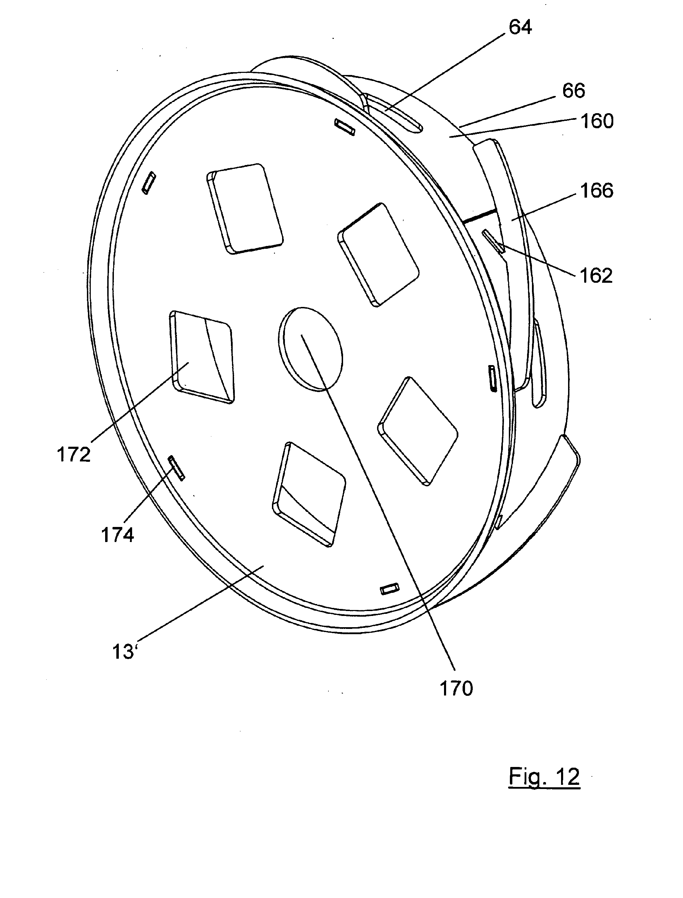

Fig. 11 zeigt eine bevorzugte Ausführung der Lagerscheibe, die hier mit 13' bezeichnet ist und die für den Wickelschutz 160 besonders geeignet ist. Die Lagerscheibe 13' weist eine Achs-Öffnung 170 auf, durch die eine Außenseite der Antriebswelle 12 im montierten Zustand geführt ist. Außerdem sind Zinkenträger-Öffnungen 172 vorhanden, durch die jeweils eine Außenseite von einem der Zinkenträger im montierten Zustand geführt ist. Derartige Öffnungen sind auch bei dem Gutaufnehmer 10 bzw. dessen Lagerscheibe 13 vorhanden und beispielsweise in Fig. 5 und 7 angedeutet; wo allerdings die entsprechenden Teile der Antriebswelle 12 bzw. der Zinkenträger 24 montiert und daher die zugehörigen Öffnungen schlecht erkennbar sind. Die Lagerscheibe 13' weist zusätzlich noch Wickelschutz-Öffnungen 174 auf, durch die im montierten Zustand die Vorsprünge 164 des Wickelschutzes 160 eingeführt sind, wie in Fig. 12 angedeutet. Durch eine passende Anordnung der Vorsprünge 164 und der Wickelschutz-Öffnungen 174 kann erreicht werden, dass im montierten Zustand der Wickelschutz 160 bezüglich der Zinkenträger 24 bzw. der Zinken 14 optimal justiert ist. Dadurch kann gegebenenfalls auf die Positionierhilfe 62 verzichtet werden.

Fig. 13 zeigt den montierten Rotor, der auf jeder Seite einen der Wickelschutze 160 enthält. Bei Blick von Wickelschutz 160b in Richtung Wickelschutz 160a dreht sich der Rotor im Normalbetrieb entgegen dem Uhrzeigersinn.

Die dargestellten Ausführungsbeispiele können in unterschiedlicher Weise miteinander kombiniert werden. Außerdem sind verschiedene Weiterentwicklungen möglich, wie beispielsweise:
- Anstatt der x-förmigen Öffnungen 162 können auch andere Konturen verwendet werden, die eine Justierung bzw. Montage der Leitbleche 166 ermöglichen. Denkbar dafür sind insbesondere passende Sicken, Ausbeulungen, Kerben oder dergleichen.
- Anstatt der x-förmigen Schlitze 163 können auch kleinere Strukturen verwendet werden, die x-förmig angeordnet sind.
- Anstelle der Zinkenträger 24 kann auch ein Hohlzylinder vorgesehen sein, der Teil der drehbar gelagerten Trägerstruktur ist und an den die Zinken 14 befestigt sind.
- Auf die Einstellplatte 25 der Zinkenträger 24 kann verzichtet werden, wenn der gewünschte Zinken-Winkel α nicht variiert zu werden braucht.
- In einer besonders vorteilhaften Ausführungsform sind die Zinken 14 flexibel an der Trägerstruktur befestigt, wobei die Zinken 14 als Doppelfederzinken vornehmlich eine Flexibilität senkrecht zu der Auslenkung der Federzinken in Richtung der Federwirkung der Federspirale der Federzinken aufweisen. Die flexible Befestigung der Federzinken an der Trägerstruktur, wie Trommel oder Zinkenhalter, erfolgt durch eine wippenartige Befestigung des Federzinkens an der Trägerstruktur. In den Bereichen zwischen der Federwicklung des Federzinkens und der Trägerstruktur sind zusätzliche elastische Federelemente angeordnet, die eine gewünschte Position des Federzinkens zu der Oberfläche der Trägerstruktur gewährleisten.

Es kann auch eine einseitige Befestigung der Federzinken erfolgen, falls auf Grund der Zinkenstellung vornehmlich Belastungen in eine definierte Richtung erfolgen.

Tritt nun eine Belastung des Federzinkens oder ähnlicher Aufnahmeelemente auf, die nicht durch die federnde Wirkung der Federwicklungen verringert werden kann, ist ein Ausweichen des Zinkens in eine seitliche Richtung möglich, was die insgesamt auf den Zinken wirkenden Kräfte wesentlich verringert. Somit kann die Häufigkeit von Zinkenbrüchen erheblich reduziert werden.

Bei einer solchen Ausführungsform sind die Öffnungen 64 in ihrer Breite entsprechend anzupassen.

### Referenzzeichenliste

- 10: Gutaufnehmer
- 12: Antriebswelle
- 13: Lagerscheibe
- 14: Zinken
- 16a, b: Seitenteile
- 18a, b: Einführbleche
- 20: Erste Abstreifer
- 22: Zweite Abstreifer
- 25: Positionierplatte
- 24: Zinkenträger
- 26: Kreis der Zinkenenden
- 28: Mittelpunkt der Zinkenträger
- 52: Federschuh
- 54: Druckplatte
- 56: Zylinderschraube
- 58: Sicherungsmutter
- 60, 60': Wickelschutz
- 62: Positionierhilfe für Wickelschutz
- 64: Langloch in Wickelschutz
- 66: Innenkante von Wickelschutz
- 67: Außenkante von Wickelschutz
- 70: Schnecke
- 72: Abdeckblech für Schnecke
- 74: Schneckenachse
- 76: Abführblech bei Schnecke
- 160: Weiterer Wickelschutz
- 162: x-förmige Öffnungen
- 163a, b: Schlitze der Öffnungen 162
- 164: Vorsprünge des Wickelschutzes
- 166: Leitbleche für Wickelschutz
- 168: Auswölbungen der Leitbleche 166
- 170: Achs-Öffnung in Lagerscheibe
- 172: Zinkenträger-Öffnungen in Lagerscheibe
- 174: Wickelschutz-Öffnungen in Lagerscheibe
- ts: Kantenlänge von 24

## Patentansprüche

1. Gutaufnehmer mit einer drehbar gelagerten Trägerstruktur (12, 13, 24), an die Aufnahmeelemente (14) zur Aufnahme von Erntegut oder dergleichen befestigt sind, **dadurch gekennzeichnet, dass** mindestens ein Abdeckelement (60; 160) bestehend aus einem oder mehreren Segmenten auf zumindest einem Teil des Umfangs zwischen dem äußeren Ende (15) eines der Aufnahmeelemente (14) und der Befestigung des Aufnahmeelementes (14) an der Trägerstruktur (24) vorgesehen ist.

2. Gutaufnehmer nach Anspruch 1, **dadurch gekennzeichnet, dass** das Abdeckelement (60; 160) kreisförmig ist oder eine Kontur aufweist.

3. Gutaufnehmer nach einem der vorigen Ansprüche, **dadurch gekennzeichnet, dass** mindestens eines der Abdeckelement (60; 160) im äußeren Bereich der Trägerstruktur (12, 13, 24) angeordnet ist.

4. Gutaufnehmer nach einem der vorigen Ansprüche, **dadurch gekennzeichnet, dass** mehrere der Abdeckelemente (60; 160) vorgesehen sind und mindestens eines dieser Abdeckelemente (60; 160) eine andere Kontur und/oder einen anderen Durchmesser hat als die anderen.

5. Gutaufnehmer nach einem der vorigen Ansprüche, **dadurch gekennzeichnet, dass** zumindest bei einem der Abdeckelemente (60; 160) die Kontur und/oder der Durchmesser verstellbar ist.

6. Gutaufnehmer nach einem der vorigen Ansprüche, **dadurch gekennzeichnet, dass** mindestens einer der Aufnahmeelemente (14) seitlich zur Rotationsrichtung verschwenkbar an der Trägerstruktur (12, 13, 24) befestigt ist.

7. Gutaufnehmer nach einem der vorigen Ansprüche, **dadurch gekennzeichnet, dass** mindestens einer der Aufnahmeelemente (14) derart montiert ist, dass er bei Ruhestellung einen vorgegebenen Zinken-Winkel (α) gegenüber der Senkrechten (L) der Trägerstruktur (12, 14) aufweist, wobei der Zinken-Winkel zwischen 0 und 20 Grad, bevorzugt zwischen 14,2 und 16,2 Grad beträgt.

8. Gutaufnehmer nach einem der vorigen Ansprüche, **dadurch gekennzeichnet, dass** federnden Elemente (14a) vorgesehen sind, die eine Auslenkung des Aufnahmeelementes (14) um bis zu 20 Grad gegenüber dem Zinken-Winkel (α) ermöglichen.

9. Gutaufnehmer nach einem der vorigen Ansprüche, **dadurch gekennzeichnet, dass** zumindest eins der Abdeckelemente (160) mindestens ein Leitblech (166) aufweist, das derart gestaltet ist, dass es Erntegut vom Außenbereich des Gutaufnehmers in dessen Innenbereich leiten kann.

10. Gutaufnehmer nach einem der vorigen Ansprüche, **dadurch gekennzeichnet, dass** zumindest eins der Abdeckelemente (160) eine Struktur (162) aufweist, in der das Leitblech (166) angebracht werden kann.

11. Gutaufnehmer nach einem der vorigen Ansprüche, **dadurch gekennzeichnet, dass** die Struktur (162) Aussparungen (163) aufweist, die x-förmig angeordnet sind und die es ermöglichen, dass das Leitblech (166) in mindestens zwei verschiedenen Positionen montiert werden kann.

12. Gutaufnehmer nach einem der vorigen Ansprüche, **dadurch gekennzeichnet, dass** zumindest eins der Abdeckelemente (60; 160) eine Positionierhilfe (62; 164, 174) aufweist, durch die das Abdeckelement (60; 160) im Betrieb eine definierte Stellung zu der Trägerstruktur (12, 24) beibehält.

13. Abdeckelement (60; 160) für einen Gutaufnehmer nach einem der vorigen Ansprüche, **dadurch gekennzeichnet, dass** es erste Öffnungen (64) aufweist, durch die Aufnahmeelemente (14) zumindest teilweise herausragen können, und dass es zweite Öffnungen (162) aufweist, mittels derer Leitbleche (166) positioniert werden können.
